(19) Europäisches Patentamt / European Patent Office / Office européen des brevets

(11) **EP 2 938 963 B1**

(12) **EUROPEAN PATENT SPECIFICATION**

(45) Date of publication and mention
of the grant of the patent:
**21.08.2019 Bulletin 2019/34**

(21) Application number: **13844545.7**

(22) Date of filing: **23.12.2013**

(51) Int Cl.:
**G01C 17/34** *(2006.01)*   **G01C 1/02** *(2006.01)*

(86) International application number:
**PCT/IT2013/000365**

(87) International publication number:
**WO 2014/102841 (03.07.2014 Gazette 2014/27)**

(54) **HIGH PRECISION ELECTRONIC SOLAR COMPASS**

HOCHPRÄZISER ELEKTRONISCHER SONNENKOMPASS

BOUSSOLE SOLAIRE ÉLECTRONIQUE DE HAUTE PRÉCISION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2012 IT RM20120664**

(43) Date of publication of application:
**04.11.2015 Bulletin 2015/45**

(73) Proprietor: **ENEA - Agenzia Nazionale per le Nuove
Tecnologie,
l'Energia e lo Sviluppo Economico Sostenibile
00196 Roma (RM) (IT)**

(72) Inventors:
• **FLORA, Francesco**
  **00196 Roma (RM) (IT)**
• **BOLLANTI, Sarah**
  **00196 Roma (RM) (IT)**
• **DE MEIS, Domenico**
  **00196 Roma (RM) (IT)**
• **DI LAZZARO, Paolo**
  **00196 Roma (RM) (IT)**
• **FASTELLI, Antonio**
  **00196 Roma (RM) (IT)**
• **GALLERANO, Gian Piero**
  **00196 Roma (RM) (IT)**
• **MEZI, Luca**
  **00196 Roma (RM) (IT)**

• **MURRA, Daniele**
  **00196 Roma (RM) (IT)**
• **TORRE, Amalia**
  **00196 Roma (RM) (IT)**
• **VICCA, Davide**
  **00196 Roma (RM) (IT)**

(74) Representative: **Tiburzi, Andrea et al
Barzanò & Zanardo Roma S.p.A.
Via Piemonte 26
00187 Roma (IT)**

(56) References cited:
**US-A- 4 874 937    US-A1- 2012 173 143**

• **CARL C LIEBE: "Solar Compass Chip",
NATIONAL AERONAUTICS AND SPACE
ADMINISTRATIONCONTRACT NO. NAS 7-918 , 1
January 2004 (2004-01-01), XP002712331,
Retrieved from the Internet:
URL:http://www.isa.org/journals/intech/sol
arcompass.pdf [retrieved on 2013-09-05]**
• **NASA: "Spacecraft sun sensors", NASA SPACE
VEHICLE DESIGN CRITERIA (GUIDANCE AND
CONTROL), 1 June 1970 (1970-06-01),
XP002712332, Retrieved from the Internet:
URL:http://www.dept.aoe.vt.edu/~cdhall/cou
rses/aoe4065/NASADesignSPs/sp8047.pdf
[retrieved on 2013-09-04]**

**Description**

The present invention relates to a High precision electronic solar compass.

More specifically, the invention concerns a high precision solar compass, studied and realized specifically to avoid the inconveniences of twilight effect and/or of the aberrations produced by refractive optics.

As it is well known, in many applications it is necessary to know with high accuracy, the orientation of the observation direction of a geographical location or a specific reference plane of an object with respect to the north. Among these applications, in addition to those typical of tachometers/theodolites as cartographic surveys, it can be mentioned measures for the geological, environmental monitoring, civil engineering surveys, urban or industrial sites surveying, installation of concentrating solar power plants (both thermal and photovoltaic), the installation of radar equipment, driving robots for surveys in contaminated areas or for extraterrestrial missions, etc.

For these purposes, generally magnetic compasses have been used, which however have a low precision. In fact, magnetic North does not coincide with the geographic North and the difference between them varies over time (even daily). Moreover, the presence of ferromagnetic materials near the compass can significantly affect the operation thereof. Therefore, the precision that can be obtained with a magnetic compass is generally of the order of 1°.

A device that greatly increases the accuracy of the measurement of geographic North is represented by solar compass, i.e. devices based on the use sun position with respect to the observer. Most modern solar compasses are electronic and equipped with a GPS (Global Positioning System), capable of providing the coordinates of the place and the time with high precision, as well as a system for detecting sun position. This position can be calculated by known equations, from which, through proper processing, the direction of true North with an accuracy of typically a few tenths of a degree can be obtained.

The use of solar compasses is very ancient, but the need of the exact time detection, the exact coordinates of the place and especially the exact sun position, has involved that only from few decades there has been a development of prototypes with a precision comparable to that of the magnetic compasses or higher.

Examples of patents belonging to the state of the art on solar compasses are patents US2155402, US2102587, GB525 927, US4899451, US5425178, US5459931, US4028813, US2010/0177601, FR2761770, ES2179721 and CN201297931U, all of which, however, generally have the disadvantage of having to set manually, by acting on suitable goniometers, the coordinates of the observation place and of the true local solar time (i.e. the correct one on the basis of the longitude of the place and of the equation of time), that can be obtained for any date from the book of the ephemeris of the current year.

Further solutions of more advanced solar compasses provide an image sensor and a second element (optical or mechanical), which combined with the sensor, allows locating the position of the sun. The sensor is generally a CCD array or a photodiode array, while the second element can be a lens (US2007/117078, US2009/0044418, also published as US2010/7698825, US2012/0173143, CN101344391, US2012/0116711), or a mask of holes (see Carl Christian Liebe of Caltech "Compact Optoelectronic Compass," NASA's Jet Propulsion Laboratory, NPO-30872, NASA Tech Briefs, January 2004) or even a simple stylus that has the function of the gnomon of a sundial (such as in US2012/0227273).

The most advanced electronic compasses are generally connected to a computer and a GPS receiver. Some of them require, as mentioned, a direct consultation of the ephemeris table (or similar) for calculating true solar time, while others have an embedded table of values or an astronomical calculation software of the position of the sun.

All the systems mentioned according to the prior art claim an accuracy generally better of magnetic compasses, to about 1/10 of degree (i.e., 6').

In light of the above, it is, therefore, object of the present invention to propose a less complex solar electronic compass, but more accurate than those made according to the already known technologies.

It is therefore specific object of the present invention an electronic solar compass according to claim 1. Further, advantageous embodiments of the device are described in dependent claims 2-11.

It is further object of the present invention a method for determining the pointing direction of an object with respect to the geographic North using a electronic solar compass according to claim 12. Further, advantageous embodiments of the method are described in dependent claims 13-15.

The present invention will be now described, for illustrative but not limitative purposes, according to its preferred embodiments, with particular reference to the figures of the enclosed drawings, wherein:

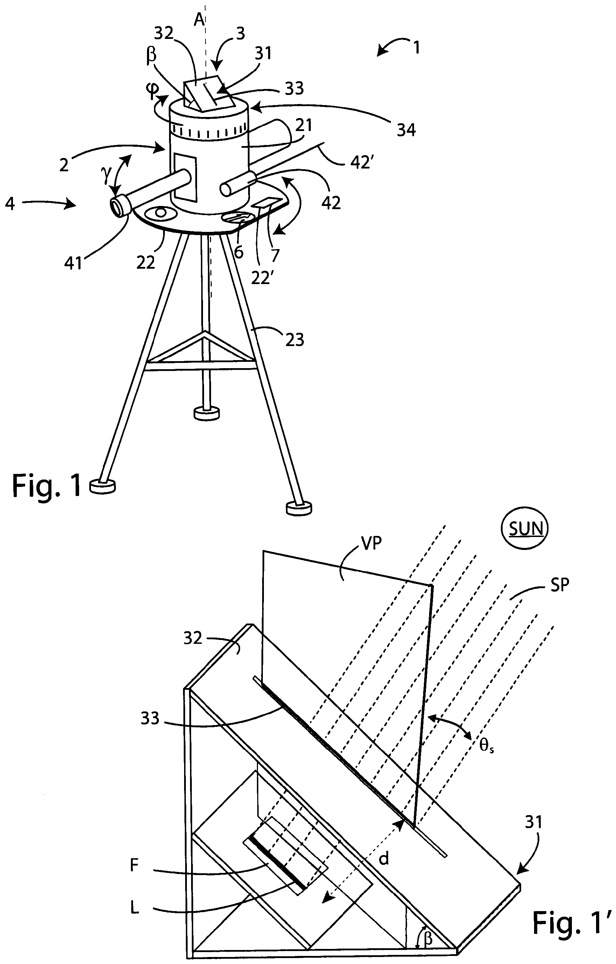

figure 1 shows a perspective view of a high precision electronic solar compass according to the present invention;
figure 1' shows a perspective view of a section of a detection unit of the electronic solar compass according to figure 1;
figure 2 shows a graph illustrating the error increase factor of the compass as a result of an error on the detection of the angle of the sun relative to the plane of the slit or of the vertical axis of the compass, in case it is chosen an inclination of the plane on which the slit equal to 45° with respect to the horizontal; and
figure 3 shows the application the compass according to an example not forming part of the invention in instruments such as theodolites, tachometers or Total Stations.

In the various figures, similar parts will be indicated by the same reference numbers.

Referring to figures 1 and 1', a high precision solar electronic compass 1 according to the present invention can be seen.

The solar electronic compass 1 comprises a support 2, a detection unit 3 of the sun, pointing means 4, a biaxial level 5 and a logic control unit (not shown in the figure).

In particular, said detection unit 3 is capable of rotating around a vertical axis indicated with the letter A, according to the angle indicated with $\varphi$, with respect to said support 2, and includes a goniometer 34 capable of measuring said angle $\varphi$. Said support 2 comprises a containment body 21, which rests on a planar base 22, with at least one straight side 22', to allow the alignment or positioning, for example to a wall, and a tripod 23. Said containment body 21 is fixed to said planar base 22, while said planar base 22 is rotatably coupled with said tripod 23, so as to rotate with respect to the vertical axis A.

The detection unit 3 comprises a container 31, in which a matrix photosensor F or optical sensor is placed, which can typically be a CCD (Charge-Coupled Device) or a CMOS (Complementary Metal-Oxide Semiconductor) image sensor. The optical sensor F can be constituted by a two dimensional array of pixels, or by an "array" (one-dimensional array) of pixels, (preferably rectangular). This configuration reduces the cost and is equivalent to an integration of the image in the direction of the light line.

Said container 31 is closed by a cover 32, suitably spaced from the photosensor F and preferably parallel thereto, on which a slit 33 of appropriate size is obtained. In particular, the choice of the slit 33, which produces the sun image on the photosensor F, in order to detect its angular position, eliminates the problems related to the aberrations produced by refractive optics and those due to the twilight effect in the devices that use a gnomon.

The dimension of the slit 33 should be large enough to avoid diffraction problems, but small enough to minimize the width of the light line on the sensor. The best compromise is to choose a width which provides for a diffraction equal to the size of the slit itself, i.e.:

$$\Delta f = \sqrt{\lambda \cdot d}, \quad [1]$$

where $\lambda$ is the average wavelength of the sunlight ($\sim 0{,}5\ \mu$m) and d is the distance that separates the slit from the sensor. For example, for a sensor distance of 1 cm, the slit should have a width of about 70 $\mu$m ($\pm 50\%$).

In particular, in one embodiment of the compass 1 according to the invention, the distance d between the photosensor F and the slit 33 is preferably between 0.5 and 5 cm and the width of the slit 33 is preferably between 50 and 160 $\mu$m.

The slit 33 and the photosensor F are preferably parallel and integral with each other and inclined by an angle $\beta$ preferably equal to 45° with respect to the horizontal plane.

The length of slit 33 is preferably equal to $d/(\sin(\beta) \cdot \cos(\beta))$, which is value such as to allow the sunlight to reach the photosensor F for any sun elevation value with respect to the horizon.

Pointing means 4 comprise an optical pointer 41, for example a telescope with crosshair, that can be inclined with respect to the plane of the planar base 22, according to an elevation angle indicated with $\gamma$, possibly combined with a laser pointer 42, capable of emitting a pointing laser beam 42'.

Said pointing means 4 are installed on said containment body 21, so as to be able to rotate around said vertical axis A. The adjustment means comprise a biaxial level 5 or a high precision digital inclinometer, for ensuring the verticality of the rotation axis A of the pointer 41, integral with the support 2, and the container 31, and a GPS detector (not shown in figure), for acquiring local coordinates and Greenwich time.

The logic control unit (not shown) also comprises a programmable microprocessor, connected to the photosensor F, to the GPS and to the goniometer 34, so as to process the received data with an appropriate software, providing on a display 6 the pointing direction of the telescope, both numerically, as well as possibly with an arrow indicating the direction of geographic North.

Compass 1 can also be equipped with interface means 7, such as a keyboard, provided with a start button and possibly a number of buttons suitable to allow entering input data required to run the measurement, and a battery and/or photovoltaic panel power supply device.

Compass 1 object of the present invention is essentially a "detection" type and it is used to determine the angle with respect to the South direction (or possibly North) called Azimut$_b$, with which an object by optical pointer 41 or laser 42 mounted on the tripod 23 is observed.

The operation of the solar compass 1 described above is as follows.

For the use of the electronic solar compass 1, directing the container 31 so that the slit 33 is roughly directed towards toward sun is necessary, so that the light that passes through it, designs a very clean bright line on the photosensor F preferably aligned parallel to the plane of the slit 33.

The photosensor F receives the light line L slightly wider than the slit 33, due to the apparent size of the sun and light diffraction. The central position of said light line, which will be denoted also with $x_l$, allows to calculate the angle $\theta_s$ between a vertical plane VP and one plane that passes through the sun SP, both containing the major axis of the slit itself:

$$\theta_s = \arctan\left(\frac{x_l}{d}\right), \quad [2]$$

where $x_l$ is, as mentioned, the distance of the center of the line light L from the center of the geometrical projection of the slit 33 on the photosensor F, which can fall, preferably, but not necessarily, at the center F of the photosensor itself, while d, as mentioned, is the distance between the slit 33 and the sensor F.

The image which forms on the photosensor F is acquired by the microprocessor, which receives as input three other data: the coordinates of the detection point, Greenwich Time and the relative rotation angle $\varphi$ between the detection unit 3 and the optical pointer 41 or, more precisely, the angle obtained by the optical pointer 41 and the vertical plane containing the major axis of the slit 33, measured in a clockwise direction, i.e., from East to West. This angle $\varphi$ is detected by the electronic goniometer 34. By processing the coordinates of the detection place and the Greenwich Time provided by GPS, the microprocessor is capable to obtain, by an appropriate mathematical algorithm suitable to perform calculations based on known equations, the values of azimuth $\theta_1$ and elevation $\delta_1'$ of the sun, or, respectively, the orientation of the sun with respect to the direction South (positive if to West) and its height with respect to the horizon plane (including the effect of air refractive index), with an accuracy 1 arcmin of degree.

An appropriate algorithm based on Kepler's laws can be very compact and can thus be implemented in microprocessors not necessarily fast or expensive, getting these angular coordinates of the sun, not only with respect to a place on Earth, but even in any other planet, of which astronomical parameters (eccentricity orbit, day length, inclination of the axis, etc.) are known.

On the basis of the above solar coordinates, together with the data obtained from the image, the microprocessor of said control logic unit may calculate the orientation $Azimut_f$ of the slit 33 with two alternative methods: a successive approximations method or a direct calculation method. In the first case, the microprocessor uses the polar coordinates transformation method from the local one $(\theta_1, \delta_1')$, to those relating to slit $(\theta_s, \delta_s')$ as a function of $Azimut_f$ and correct the value of the latter, by successive approximations, until the angular value of $\theta_s$ coincides with the experimental value provided by the photosensor F according to the above mentioned equation. In the second case, in order to significantly reduce the computation time, the microprocessor can directly use the following inversion formula:

$$Azimut_f = \arctan\left(\frac{Y}{X}\right) + 180° \cdot (X<0) \cdot \frac{Y}{|Y|} \quad [3]$$

where the truth function (X<0) is 1 or 0 if verified or not, respectively, while X and Y are given by:

$$\begin{cases} X = \dfrac{\pm\sqrt{A^2 \cdot (A^2 + B^2 - C^2)} - C \cdot B}{A^2 + B^2} \\ Y = -\dfrac{B \cdot X + C}{A} \end{cases} \quad [4]$$

with

$$\begin{cases} A = y_S \cdot \tan(\theta_S) \cdot \sin(\beta) - x_S \\ B = -x_S \cdot \tan(\theta_S) \cdot \sin(\beta) - y_S \\ C = -z_S \cdot \tan(\theta_S) \cdot \cos(\beta) \end{cases} \quad [5]$$

where $\theta_S$ is the direction value with of the sun rays with respect to the slit 33 given from the equation [2] $\beta$ is the inclination of the plane of the slit 33, while $x_S$, $y_S$, $z_S$ are the Cartesian components of the sun unit vector in the same Cartesian reference system used for $(\theta_1, \delta_1')$, i.e. with axes x, y and z coincident, respectively, with the direction South, East and the vertical of the place where the compass 1 is located (thus obtainable by the coordinates $\theta_1$, $\delta_1'$ by means of a common transformation from polar coordinates to Cartesian coordinates).

The first of the equations of the system of equations [4] shows the existence of two solutions for the value of $Azimut_f$, which physically correspond to the case, in which the slit faces approximately towards the sun or from the opposite side. The right solution to be used is always the one with "+" sign, with the exception of the cases in which, using that sign it would result $X \cdot A > 0$.

Finally, just by adding to the angle $Azimut_f$ the rotation angle $\varphi$ of the goniometer 34 of the compass 1, i.e. the angle between the direction of the pointer 41 and that of the vertical plane containing the main axis of the slit 33, the microprocessor provides the azimuth of the observed object:

$$Azimut_b = Azimut_f + \varphi, \quad [6]$$

showing it on the display 6 of the compass 1 in both numerical and graphically.

The operation phases of the compass 1 are the following:

(a) the operator places the tripod 23 of the compass 1, so that the bi-axial level 5 indicates the horizontality of the planar base 22 (i.e., the verticality of its axis of rotation with respect to the tripod 23);

(b) using the optical pointer 41 or laser 42, the planar base 22 rotates up to align it with the object of which the orientation is whished, to know the orientation and it is locked in position with suitable locking means;

(c) starting the measuring procedure, the microprocessor, by means of a motor, rotates the detection unit 3, until the photosensor F receives a light line from the sun (and then until the slit 33 is located approximately opposite the sun). In general, the visual field of the photosensor F can be sufficiently wide, i.e. a few degrees, such as to allow the same tolerance on the motorized movement. Indeed, the high precision is required only on the final reading of the angular value $\varphi$ of the goniometer 34 and the position $x_l$ of the light line, and not on the control of the position in which the engine stops after the microprocessor has detected the existence of a light line on the photosensor F. In this phase, in order to increase the data transfer speed, the microprocessor may limit the detection of the image of the photosensor F to a few rows. The goniometer 34, moreover, can also be manual reading. In this case, the microprocessor can emit a sound signal, when it receives a signal considered acceptable from the photosensor F, i.e., when it detects the presence of a light line, quite distinct in the visual field;

(d) the microprocessor acquires from the goniometer 34 (or from the operator, in case of manual reading goniometer) the value of the angle $\varphi$ between the vertical plane containing the main axis of the slit 33 and pointer 41;

(e) the microprocessor acquires the image from the photosensor F and calculates the sun position $\theta_s$ with respect to the slit 33 according to the equation [2];

(f) the microprocessor acquires the geographic location from the GPS and the Greenwich Time, in order to calculate the local coordinates $\delta_1'$ and $\theta_1$ of the sun, and, then, by equation [3] described above, the orientation $Azimut_f$ of the vertical plane containing the main axis of the slit 33. Finally, by equation [6], the microprocessor calculates the orientation $Azimut_b$ of the pointer 41, and then the object of interest.

Furthermore, after acquiring the image from the detection unit 3, obtaining the value corresponding to the center of the line light $x_1$ is necessary. In order to reduce the electronic noise of the photosensor F and any spurious signals, firstly, as already said, the microprocessor integrates the image in the direction of the light line, i.e. it sums the contributions of all the rows, in order to have no longer a matrix of values but a vector, Im (x). Then it runs a "smoothing" of Im (x), averaging the values with those of the nearest neighbors according to the equation:

$$\text{Im}'(x) = \frac{\text{Im}(x-1) + 2 \cdot \text{Im}(x) + \text{Im}(x+1)}{4}, \quad [7]$$

this process is repeated a few tens of times for obtaining a more regular curve, where the position of the maximum can be easily identified.

Alternatively, $x_l$ can be obtained as the position of the best fit on Im (x) parabola vertex in a suitable neighborhood of the maximum of Im (x).

Finally, it can be chosen to calculate $x_l$ as "center of gravity" of the figure of the profile in an appropriate range (for example in the range in which the profile exceeds 50% of the value of its maximum). In this case $x_l$ is then obtained by the following relation:

$$x_l = \frac{\int\limits_{x1}^{x2} Im(x) \cdot x dx}{\int\limits_{x1}^{x2} Im(x) dx} \quad [8]$$

where $x_1$ and $x_2$ are the endpoints of the range where Im (x) exceeds 50% of its maximum.

From the above-mentioned equations, which describe the dependence of $\theta_s$ from the azimuth of the vertical plane containing the main axis of the slit 33 of the compass 1, it is possible to obtain the sensitivity of the azimuth with respect to an error on $\theta_S$, $K_i = \Delta Azimut_b/\Delta\theta_s$, as a function elevation $\delta_1'$ of the sun:

$$K_i = -\frac{\partial Azimut_b}{\partial \theta_s} = \sin\beta + \cos\beta \tan\delta_1'. \quad [9]$$

Similarly the sensitivity of the azimuth with respect to a possible error of verticality $\alpha$ of A axis of the compass (or of horizontality indicated by the level thereof) in the direction orthogonal to that in which the sun is located can be obtained:

$$K_V = -\frac{\partial Azimut_b}{\partial \alpha} = \cos\beta + \sin\beta \tan\delta_1'. \quad [10]$$

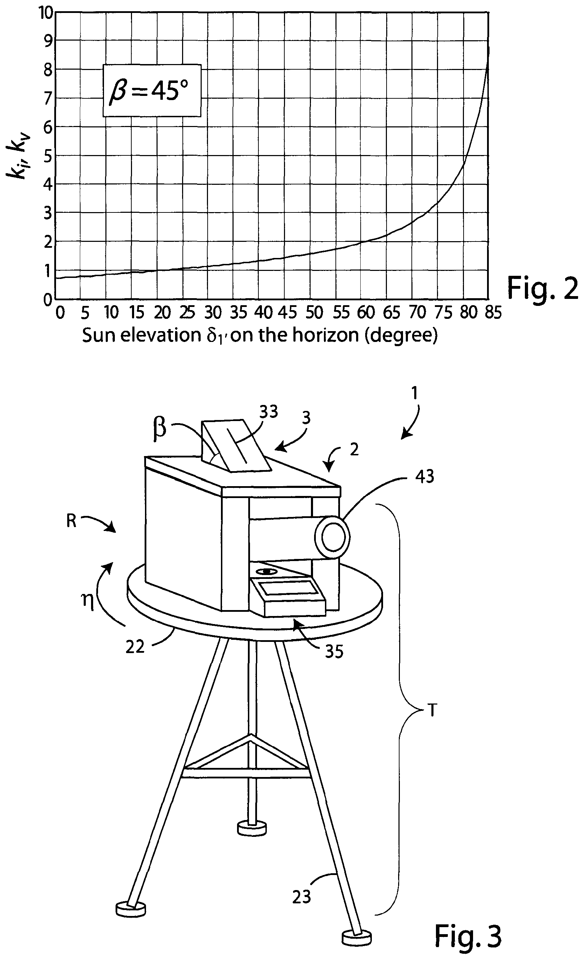

It is possible to note that for $\beta = 45°$ the two growth error factors are equal, as shown in figure 2, and their sum is a minimum.

Regardless of the goodness construction of the compass 1, there is a imprecision growth factor that depends on the elevation, which has the sun on the horizon at the time of measurement. The more the sun approaches the zenith (i.e. the vertical of the place of observation), the more the accuracy of the instruments is limited. This is true for any solar compass.

Furthermore, as shown in graph of said figure 2, at high latitudes, i.e. for latitudes greater than 60°, where magnetic compasses are particularly inaccurate, solar compasses reach the best performance, achieving an accuracy of a few arcmin of degree, for compasses according to the prior art, and 1' for the compass herein described, in any season and in any moment of the day. Instead, it is convenient, for lower latitudes in the summer season (and even in other seasons, in case of places between the tropics), choosing to use the compass in the hours when the sun elevation remains low ($\delta_1' < 60°$) .

The choice of the distance d between the photosensor F and slit 33 is linked to the image detector model that it is wished to be used.

For example, using a CMOS detector, which typically may have a pixel size $\Delta_{pixel} \sim 3$ $\mu$m and a width of the visual field $V \sim 3$ mm (for a total of about 1000 × 1000 pixel), and wishing to be in the condition where the error $\Delta_{pixel}/d$ on the estimation of the angular position of the sun $\theta_s$ is $\leq 1'$, while the tolerance range V/d in turning the slit toward the sun is $\geq 5°$, d should be maintained in the range of 10mm - 35mm.

The compass 1 according to the invention has been subject to experimental tests by a prototype tested in ENEA Centre of Frascati (Rome), in which:

- the box containing the photosensor F has been made using aluminum plates of 3 and 5mm thickness;
- the slit 33 has been obtained by placing two scalpel blades side by side and pasting them to a metal plate perforated with the result of having an opening $\Delta f$ of 30 $\mu$m (less than the optimal);
- as detector, a 352×288 pixels webcam sensor has been used, placed approximately at about 20 mm from the slit. The pixel size is about 8 $\mu$m;
- the optical pointer 41 is a part of a telescope pointing system;
- to measure the rotation angle between the compass and the telescope a 8 cm diameter manual goniometer with a sexagesimal nonius has been used;
- to ensure the verticality of the rotation axis of the compass 1, a air bubble biaxial level has been used;
- to detect the coordinates of the location and Greenwich Time, a GPS module has been used;
- the software for azimuth calculation has been added to a portable personal computer, which have been connected to the optical sensor and the GPS module.

The use of a low-resolution webcam and non-electronic devices, with view reading, introduces uncertainty to the extent that they are quantifiable as:

- optical sensor = 1.4';
- goniometer = 2';
- level = 2'.

In order to have a zero reference point on the scale of the goniometer, an absolute calibration of the compass has been performed using as definite North-South direction that connects a plumb line with the position of its shadow on a wall at the transit time of the sun at the real local time. By optimizing the technique and checking the transit time of the sun from the ephemeris tables of the year (website: http://www.nrel.gov/midc/solpos/spa.html) in this setting, an accuracy of 1' has been achieved.

The experimental test of the compass 1 has been performed from the roof of an ENEA Centre Research building at Frascati, sighting up five objectives that are, with respect to the center ENEA, at different distances and in different directions: (1) Telecom tower antenna pinnacle in Rome, near the crossing Laurentina - Grande Raccordo Anulare, (2) the top of SS. Peter and Paul church dome in Rome EUR, (3) the center of the south face of the Orsini Castle in S. Angelo Romano, (4) the top of a big silos in the Roman countryside, not far from said Castle Orsini, (5) the cross of the bell tower of Montecompatri town.

The distances of the five objectives from the detection point are equal respectively to 15.1 km, 17.4 km, 23.7 km, 20.8 km and 5.7 km. It should be noted that, at these distances, an angular error of 1' corresponds to a linear transverse displacement, respectively, of 4.4 m, 5.1 m, 6.9 m, 6.1 m and 1.7 m.

The measurements have been carried out on five targets around at 16:00 on October 19, 2012, with a sun elevation of approximately 24°. This elevation is optimal, since it does not involve a deterioration of the accuracy because, in these conditions, the factor $K_i$ is equal to ~ 1.0 (see figure 2).

Considering all the contributions, then, the maximum measurement error, estimated for the above prototype in the case of these tests is equal to: $\Delta Azimut_b = [1,4'(CCD) + 2' (livella)]*1,0 + 2'(goniometro) \sim 5'$.

In order to verify the accuracy of the data obtained from the compass 1, it is necessary to know the true value of "Azimut-T" of azimut (theoretical value of $Azimut_b$) of the objectives seen from the place where the compass 1 is. For this reason, the method of satellite maps has been used and the processing of geographical coordinates of various targets, using the ellipsoidal model of the earth. The results are shown in the following table, where the experimental values "$Azimut_b$" of the objectives achieved with compass 1 are compared with the theoretical ones "Azimut-T" obtained from satellite maps of two different websites: the website of Google Earth (GE) and the one of Faureragani (FA.) available at the web addresses http://www.google.it/earth/index.html and http://www.faureragani.it/mygps/getlatlonita.html. The last two columns of the table provide the differences "$\Delta$" in arcmin, of the experimental value "$Azimut_b$" with respect to above two theoretical values.

| Objective | Distance from the compass | $Azimut_b$ | Azimut-T accordin g to G.E. | Azimut-T according to FA. | $\Delta$-G.E. (arcmin) | $\Delta$-FA. (arcmin) |
|---|---|---|---|---|---|---|
| 1-Telecom Antenna | 15.1 km | +80.691° | + 80.658° | +80.662° | +2.0' | + 1.7' |
| 2- S. Pietro & Paolo Dome | 17.4 km | +93.978° | +93.945° | +93.932° | +2.0' | +2.8' |
| 3- Orsini Castle | 23.7 km | -171.482° | -171.489° | -171.464° | +0.4' | -1.1' |
| 4- Silos in the countryside | 20.8 km | -169.555° | -169.573° | -169.567° | +1.1' | +0.7' |
| 5 Bell tower of Montecomp. | 5.7 km | -75.021° | -75.057° | -75.018° | +2.2' | -0.2' |

As it can be seen, despite the use of not optimized components, not only the errors are within the expected accuracy, but they are less than 3' (equal to 1/20 of degree) or only three times higher than the best reached accuracy, according to the estimates of the inventors, from this model of solar compass and already much smaller than those claimed by any detection system based on the observation of the sun actually on the market. Moreover, as evident in the table, errors of the level of 1' - 2' may also be present on the theoretical values of azimuth, depending on which source is used for the determination of the geographical coordinates of the identified objectives.

Figure 3 shows a further use of the solar electronic compass 1 according to an example not forming part of the invention, which provides an alternative method for determining the azimuth of a direction with respect to the geographic North. In this case, the support 2 with the detection unit 3, provided with photosensor F and slit 33, is installed directly in the tools typically used in geodetic and construction sites, such as theodolites, tachometers or modern Total Stations, i.e. in a measuring device, equipped with an optical pointer 43, a goniometer 35 and a movable section R, capable to rotate around a vertical axis A, which will be indicated generically in the following with T. In this case, the pointing means 4, the goniometer 34, the biaxial level 5, the tripod 23 and possibly also the GPS are already part of the device T.

In this use, the operation method of said electronic solar compass consists in placing the support 2 on the upper part of the measuring instrument T (with T indicating a digital theodolite or a total station or a tool provided with an optical pointer 43 and an azimuthal goniometer 35), in place of the handle of the same. At this point, the detection unit 2 of said compass is rotated, with respect to the tool T, so that the direction pointed by optical pointer 43 lies on the vertical plane VP containing the major axis of the slit 33 and the rotation of said detection unit 2 is blocked in this position, making it integral with the movable section R of said tool T.

In order to perform the azimuth measurement, tool T is placed on the observation point and is adjusted so that the axis A is vertical. Then the movable section R is rotated, so that the slit 33 is approximately oriented towards the sun and therefore on the photosensor F a light line appears. In this position the goniometer 35 of the tool T is resetted and the angular position of the sun is acquired, thus obtaining the value of $Azimut_f$, or the azimuth of the vertical plane VP containing the major axis of the slit 33 according to the steps already described in the previous method. Then, movable section R is rotated in order to point the objective, of which the direction of observation $Azimut_t$ is wished to know, with respect to true North, by pointer 43. The azimuthal angle $\eta$ of which the movable section R is rotated, added to the value $Azimut_f$, provides the desired value $Azimut_t$.

The advantages of the just described method are basically two. On the one hand, it is enhanced a classical instrument like a theodolite/tachometer, which typically allows absolute measurements only for the value of zenith angle (i.e. for the angular height of the object of interest with respect to the horizontal plane) but not for the azimuthal angle (i.e. it allows only measuring differences in orientation between objects of interest with respect to the position where the device T is located), turning it into a tool that can provide absolute azimuth values for each object (i.e., referring to the direction of South or North of the place where the instrument is located).

On the other hand, the detection of the direction of the sun is carried out only once (immediately after positioning the device T) and there is no need to repeat it until the tripod 23 of device T is not moved. This allows not only to save time in using the compass 1, but even to use the device T, both on days with clear skies as well as in the days when the sky is in part cloudy and then the sun appears for only a few moments. To these advantages, of course, the economic advantage is summed, due to the use of a tool (T) already realized and industrialized.

Therefore, an advantage of the compass is that it can be installed directly in tools used in geodetic and construction sites such as theodolites and tachometers (or the modern "Total Stations").

A further advantage of the compass according to the present invention is that of being capable to operate also on other planets or solar system satellites.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1.  Electronic solar compass (1) comprising
    a support (2), capable of rotating around a vertical axis (A),
    a detection unit (3) of the position of the sun, arranged on said support (2), said detection unit (3) being capable of rotating around said vertical axis (A) of a rotation angle ($\varphi$) with respect to said support (2), said detection unit (3) comprising an electronic goniometer (34), adapted to measure said rotation angle ($\varphi$),
    pointing means (4) integral with said support (2), and
    a visualization display (6),
    said solar electronic compass (1) being **characterized**
    **in that** said detection unit (3) comprises a matrix photosensor (F), a logic control unit, operatively connected with said photosensor (F), with said electronic goniometer (34) and said display (6), and a container (31), in which said photosensor (F) is placed, said container (31) having a rectilinear slit (33) for the passage of sunlight toward said photosensor (F), said slit (33) having a width and a slit length and being integral with said photosensor (F),
    **in that** said slit (33) and said photosensor (F) are inclined by an angle ($\beta$) with respect to the horizontal plane, preferably equal to 45°, and are separated by a distance (d), and

**in that** said width of said slit (33) is approximately equal to $\sqrt{\lambda \cdot d}$, where $\lambda$ is the average wavelength of the sunlight, equivalent to about 0.5 $\mu$m, and d is said distance of said slit (33) from said photosensor (F), said logic control unit being programmed to calculate the ephemeris of the sun on the basis of the time and the geographical coordinates of the location of the compass (1) and to process the data received by said photosensor (F) and from said electronic goniometer (34), so as to measure the pointing direction of said pointing means (4) with respect to the geographical North and/or with respect to the geographical South, showing the result on said visualization display (6).

2. Electronic solar compass (1) according to claim 1, **characterized in that** said length of said slit (33) is equal to d/[sin ($\beta$)·cos($\beta$)].

3. Electronic solar compass (1) according to anyone of the preceding claims, **characterized in that** said container (31) comprises a cover (32) and **in that** said slit (33) is obtained on said cover (32).

4. Electronic solar compass (1) according to anyone of the preceding claims, **characterized in that** the distance d of said slit (33) from said photosensor (F) is between 0.5 cm and 5 cm and **in that** the slit width (33) is between 50 $\mu$m and 160 $\mu$m.

5. Electronic solar compass (1) according to anyone of the preceding claims, **characterized in that** the distance d between the plane in which said slit lies (33) and the plane of said photosensor (F) is constant and the geometrical projection of said slit (33) on said photosensor (F) is preferably parallel to one of the sides of the photosensor (F).

6. Electronic solar compass (1) according to anyone of the preceding claims, **characterized in that** said photosensor (F) is constituted by a CCD (Charge-Coupled Device), and/or a CMOS (Complementary Metal-Oxide Semiconductor) image sensor, and/or a linear array of pixels, preferably rectangular.

7. Electronic solar compass (1) according to anyone of the preceding claims, **characterized in that** said support (2) comprises a containment body (21), a planar base (22), on which said containment body (21) is fixed, and a tripod (23), and **in that** said pointing means (4) include an optical pointer (41), such as a telescope provided with crosshair that can be inclined with respect to the plane of the planar base (22), according to an elevation angle ($\gamma$), and/or a laser pointer (42), adapted to emit a pointing laser beam (42'), which can also be inclined with respect to the plane of the planar base (22), according to said elevation angle ($\gamma$).

8. Electronic solar compass (1) according to anyone of the preceding claims, **characterized in that** it comprises adjustment means including a biaxial level (5) and/or an electronic inclinometer, adapted to detect the verticality of said vertical rotation axis (A) of said support (2) and of said container (31), and/or means for acquiring local coordinates and Greenwich Time, as, for example, a GPS detector.

9. Electronic solar compass (1) according to claim 8, **characterized in that** said control logic unit is connected with said GPS and/or said digital inclinometer, said control logic unit being programmed to process data received from said GPS and/or said digital inclinometer.

10. Electronic solar compass (1) according to anyone of the preceding claims, **characterized in that** said support (2) comprises a motorized device for the rotation of said detection unit (3) around said rotation vertical axis (A), and **in that** said control logic unit controls the movement of said detection unit (3) till the positioning of the slit (33) is approximately in front of the sun.

11. Electronic solar compass (1) according to anyone of the preceding claims, **characterized in that** it comprises fixed or variable optical density filters, such as filters based on the rotation of polarizers and/or photochromic filters, and/or an automatic exposure system of said photosensor (F), suitable to reduce the solar radiation that passes through said slit (33), so as to optimize the signal/noise ratio of the sunlight impinging on said photosensor (F).

12. Method for determining the pointing direction of an object with respect to the geographic North using an electronic solar compass (1) according to anyone of the preceding claims, **characterized in that** it comprises the following steps:

    (a) positioning said electronic solar compass (1), so that the support (2) and said detection unit (3) rotation vertical axis (A) is vertical;

(b) directing said pointing means (4) up to align them with an object, of which the orientation is wished to know;

(c) rotating said detection unit (3), until said photosensor (F) receives a line of light (L) from the sun, orienting said slit (33) approximately in front of the sun;

(d) measuring said angle of rotation ($\varphi$) of said detection unit (3), with respect to said pointing means (4), by means of said electronic goniometer (34);

(e) acquiring from said electronic goniometer (34) the value of said angle of rotation ($\varphi$);

(f) acquiring an image of the light line (L) projected from said slit (33) and detected by said photosensor (F), and calculate by means of said logic control unit an angular position ($\theta_S$) of the sun, with respect to the vertical plane containing the major axis of said slit (33) according to the equation $\theta_s = \arctan\left(\dfrac{x_l}{d}\right)$, where $x_l$ is the

distance of the center of the light line (L), that arrives on the photosensor (F) from the center of the geometrical projection of the slit (33) on said photosensor (F) and where the angular position of the sun $\theta_s$ is the angle between the vertical plane (VP) that contains the major axis of said slit (33) and the plane (SP), which passes through the sun and contains the major axis of said slit (33);

(g) acquiring the geographic location of said electronic solar compass (1) and Greenwich Time; and

(h) calculating the pointing direction of said object, of which the orientationis wished to know, with respect to the direction of the North, by the following substeps:

- calculating, on the basis the data obtained in previous steps (d)-(g), local polar coordinates ($\theta_1$, $\delta_1$') of the sun, where $\theta_1$ is the azimuth of the sun with respect to the local direction of the South, defined positive/negative if the position of the sun is respectively at west/east, while $\delta_1$' is the apparent elevation of the sun on the horizon that includes the air refractive effect, using an algorithm for determining the solar coordinates;

- calculating the orientation angle $Azimut_f$ of the vertical plane (VP) containing the major axis of said slit (33), through the system of equations:

$$Azimut_f = \arctan\left(\frac{Y}{X}\right) + 180° \cdot (X < 0) \cdot \frac{Y}{|Y|}$$

$$\begin{cases} X = \dfrac{\pm\sqrt{A^2 \cdot (A^2 + B^2 - C^2)} - C \cdot B}{A^2 + B^2} \\[4mm] Y = -\dfrac{B \cdot X + C}{A} \end{cases}$$

$$\begin{cases} A = y_S \cdot \tan(\theta_S) \cdot \sin(\beta) - x_S \\ B = -x_S \cdot \tan(\theta_S) \cdot \sin(\beta) - y_S \\ C = -z_S \cdot \tan(\theta_S) \cdot \cos(\beta) \end{cases}$$

in which the truth function (X<0) is 1 or 0 respectively if verified or not, $\beta$ is the inclination of the slit (33) plane, while $x_S$, $y_S$, $z_S$ are the Cartesian components of the unit vector of the sun in the same Cartesian reference system used for the local polar coordinates ($\theta_1$, $\delta_1$'), respectively coincident with the directions South, East and vertical of the place where said electronic solar compass (1) is, that can be obtained from the local polar coordinates ($\theta_1$, $\delta_1$') by means of common transformation from polar coordinates to Cartesian coordinates; and

- calculating, by the equation:

$$Azimut_b = Azimut_f + \varphi,$$

the angle $Azimut_b$, with respect to the direction North being in the Northern/Southern Hemisphere, on which said pointing means (4) are aligned with said object of which the orientation or view direction is wished to know, said view direction being the direction of the straight line joining the center of said electronic solar compass (1) to the object itself.

13. Method according to claim 12 , using an electronic compass according to claim 8, **characterized in that** said step (a) is carried out by means of said biaxial level (5), so that the biaxial level indicates that said planar base (22) is in a horizontal position, so that the support (2) and said detection unit (3) rotation axis (A) is vertical.

14. Method according to anyone of claims 12 or 13, **characterized in that** said acquiring step (f) for determining the value $x_l$, comprises the following substeps:

- digitizing said image detected by said photosensor (F), obtaining a two dimensional array of numeric values proportional to the light intensity;
- integrating the values of said matrix in the direction of the light line (L), or summing the contributions of all the rows in order to have a one-dimensional vector of values Im (x), where the origin x=0 of the variable x coincides with the geometric center of the projection of the slit (33) of said photosensor (F), said integration allowing a reduction of the image to a one-dimensional profile, and then to a strong reduction of the statistical noise, which is a critical point for achieving high accuracy of the electronic solar compass (1);
- calculating a new vector of values by averaging values of a values vector Im (x) obtained with those of the nearest neighbors according to the "smoothing" parabolic equation:

$$\mathrm{Im}'(x) = \frac{\mathrm{Im}(x-1) + 2 \cdot \mathrm{Im}(x) + \mathrm{Im}(x+1)}{4},$$

and repeating this step a plurality of times, to obtain a more regular curve in which $x_l$ easily identify the position of the maximum of Im'(x) and/or;
- calculating the distance $x_l$ of the light line (L) center from the geometric projection of the slit (33) center of said photosensor (F), as the position of the vertex of a parabola, which interpolates values of said vector Im (x) in a neighborhood of the maximum of said values vector Im (x) and/or;
- calculating the distance $x_l$ of the light line center (L) from the center of the geometrical projection of the slit (33) on said photosensor (F) as the barycenter of the figure of said values vector Im(x) at a specific interval by the following equation:

$$x_l = \frac{\int\limits_{x1}^{x2} Im(\,x\,) \cdot x dx}{\int\limits_{x1}^{x2} Im(\,x\,) dx}$$

where $x_1$ and $x_2$ are the ends of an interval in which the values vector Im(x) exceeds a percentage, preferably 50%, of its maximum.

15. Method according to anyone of claims 12-15, using an electronic compass according to claim 8, **characterized in that** said acquiring step (g) is carried out by said GPS and/or by maps and geographical Greenwich Time by said GPS and/ or by a precision watch.

**Patentansprüche**

1. Elektronischer Sonnenkompass (1), umfassend
   eine Halterung (2), die in der Lage ist, um eine vertikale Achse (A) zu drehen,
   eine Sonnenpositionsdetektionseinheit (3), die auf der Halterung (2) angeordnet ist, wobei die Detektionseinheit (3) in der Lage ist, um die vertikale Achse (A) eines Drehwinkels ($\varphi$) in Bezug auf die Halterung (2) zu drehen, wobei die Detektionseinheit (3) ein elektronisches Goniometer (34) umfasst, das zum Messen des Drehwinkels ($\varphi$) angepasst ist,

mit der Halterung (2) einstückige Zeigemittel (4) und
eine Visualisierungsanzeige (6),
wobei der elektronische Sonnenkompass (1) **dadurch gekennzeichnet ist,**
**dass** die Detektionseinheit (3) einen Matrixphotosensor (F), eine logische Steuereinheit, die mit dem Photosensor (F), dem elektronischen Goniometer (34) und der Anzeige (6) funktional verbunden ist, und einen Behälter (31), in dem der Photosensor (F) platziert ist, umfasst, wobei der Behälter (31) einen geradlinigen Spalt (33) für den Durchlass von Sonnenlicht in Richtung des Photosensors (F) aufweist. wobei der Spalt (33) eine Breite und eine Spaltlänge aufweist und mit dem Photosensor (F) einstückig ist,
**dass** der Spalt (33) und der Photosensor (F) um einen Winkel ($\beta$), vorzugsweise gleich 45°, in Bezug auf die horizontale Ebene geneigt und um einen Abstand (d) getrennt sind, und
**dass** die Breite des Spalts (33) etwa gleich $\sqrt{\lambda \cdot d}$ ist, wobei $\lambda$ die mittlere Wellenlänge des Sonnenlichts ist, die etwa 0,5 $\mu$m entspricht, und d der Abstand des Spalts (33) vom Photosensor (F) ist,
wobei die logische Steuereinheit so programmiert ist, dass sie die Ephemeride der Sonne auf der Grundlage der Zeit und der geographischen Koordinaten des Standorts des Kompasses (1) berechnet und die vom Photosensor (F) und vom elektronischen Goniometer (34) empfangenen Daten so verarbeitet, dass die Zeigerichtung der Zeigemittel (4) in Bezug auf den geographischen Norden und/oder in Bezug auf den geographischen Süden gemessen wird, wobei das Ergebnis auf der Visualisierungsanzeige (6) angezeigt wird.

2. Elektronischer Sonnenkompass (1) nach Anspruch 1, **dadurch gekennzeichnet, dass** die Länge des Spalts (33) gleich $d/[\sin(\beta) \cdot \cos(\beta)]$ ist.

3. Elektronischer Sonnenkompass (1) nach einem der vorstehenden Ansprüche, **dadurch gekennzeichnet, dass** der Behälter (31) eine Abdeckung (32) umfasst und dass der Spalt (33) auf der Abdeckung (32) erhalten wird.

4. Elektronischer Sonnenkompass (1) nach einem der vorstehenden Ansprüche, **dadurch gekennzeichnet, dass** der Abstand d des Spalts (33) vom Photosensor (F) zwischen 0,5 cm und 5 cm beträgt und dass die Spaltbreite (33) zwischen 50 $\mu$m und 160 $\mu$m beträgt.

5. Elektronischer Sonnenkompass (1) nach einem der vorstehenden Ansprüche, **dadurch gekennzeichnet, dass** der Abstand d zwischen der Ebene, in welcher der Spalt sich befindet (33), und der Ebene des Photosensors (F) konstant ist und die geometrische Projektion des Spalts (33) auf dem Photosensor (F) vorzugsweise parallel zu einer der Seiten des Photosensors (F) ist.

6. Elektronischer Sonnenkompass (1) nach einem der vorstehenden Ansprüche, **dadurch gekennzeichnet, dass** der Photosensor (F) aus einem CCD- (ladungsgekoppelten Vorrichtungs-) und/oder einem CMOS (komplementären Metall-Oxid-Halbleiter-)Bildsensor und/oder einem linearen Pixelarray, das vorzugsweise rechteckig ist, besteht.

7. Elektronischer Sonnenkompass (1) nach einem der vorstehenden Ansprüche, **dadurch gekennzeichnet,**
**dass** die Halterung (2) einen Aufnahmekörper (21), einen planaren Sockel (22), auf dem der Aufnahmekörper (21) befestigt ist, und ein Stativ (23) umfasst, und
**dass** die Zeigemittel (4) einen optischen Zeiger (41), wie ein mit einem Fadenkreuz bereitgestelltes Teleskop, der in Bezug auf die Ebene des planaren Sockels (22) um einen Elevationswinkel ($\gamma$) geneigt sein kann, und/oder einen Laserpointer (42), der zum Emittieren eines gerichteten Laserstrahls (42') angepasst ist, der in Bezug auf die Ebene des planaren Sockels (22) auch um den Elevationswinkel ($\gamma$) geneigt sein kann, umfassen.

8. Elektronischer Sonnenkompass (1) nach einem der vorstehenden Ansprüche, **dadurch gekennzeichnet, dass** er Einstellmittel, die eine Zweiachsen-Wasserwaage (5) und/oder einen elektronischen Neigungsmesser einschließen, die bzw. der zum Detektieren der Vertikalität der vertikalen Drehachse (A) der Halterung (2) und des Behälters (31) angepasst ist, und/oder Mittel zur Erfassung lokaler Koordinaten und der Greenwich-Zeit, wie beispielsweise einen GPS-Detektor, umfasst.

9. Elektronischer Sonnenkompass (1) nach Anspruch 8, **dadurch gekennzeichnet, dass** die logische Steuereinheit mit dem GPS und/oder dem digitalen Neigungsmesser verbunden ist, wobei die Steuereinheit so programmiert ist, dass sie Daten verarbeitet, die vom GPS und/oder dem digitalen Neigungsmesser empfangen werden.

10. Elektronischer Sonnenkompass (1) nach einem der vorstehenden Ansprüche, **dadurch gekennzeichnet, dass** die Halterung (2) eine motorisierte Vorrichtung zum Drehen der Detektionseinheit (3) um die vertikale Drehachse (A) umfasst und dass die logische Steuereinheit die Bewegung der Detektionseinheit (3) steuert, bis sich die Positionierung des Spalts (33) etwa vor der Sonne befindet.

11. Elektronischer Sonnenkompass (1) nach einem der vorstehenden Ansprüche, **dadurch gekennzeichnet, dass** er Filter mit einer festen oder variablen optischen Dichte wie Filter, die auf der Drehung von Polarisatoren und/oder photochromen Filtern basieren, und/oder ein automatisches Belichtungssystem des Photosensors (F), das dazu geeignet ist, die durch den Spalt (33) gelangende Sonnenstrahlung zu reduzieren, um das Signal-Rausch-Verhältnis des auf den Photosensor (F) auftreffenden Sonnenlichts zu optimieren, umfasst.

12. Verfahren zur Bestimmung der Zeigerichtung eines Objekts in Bezug auf den geographischen Norden unter Verwendung eines elektronischen Sonnenkompasses (1) nach einem der vorstehenden Ansprüche, **dadurch gekennzeichnet, dass** es die folgenden Schritte umfasst:

(a) das Positionieren des elektronischen Sonnenkompasses (1) so, dass die vertikale Drehachse (A) der Halterung (2) und der Detektionseinheit (3) vertikal ist;
(b) das Richten der Zeigemittel (4) nach oben, um sie auf ein Objekt auszurichten, dessen Orientierung ermittelt werden soll;
(c) das Drehen der Detektionseinheit (3), bis der Photosensor (F) eine Lichtlinie (L) von der Sonne empfängt, wobei der Spalt (33) etwa vor der Sonne ausgerichtet ist;
(d) das Messen des Drehwinkels ($\varphi$) der Detektionseinheit (3) in Bezug auf die Zeigemittel (4) mittels des elektronischen Goniometers (34);
(e) das Erfassen des Werts des Drehwinkels ($\varphi$) vom elektronischen Goniometer (34);
(f) das Erfassen eines Bildes der vom Spalt (33) projizierten und vom Photosensor (F) detektierten Lichtlinie (L) und das mittels der logischen Steuereinheit Berechnen einer Winkelposition ($\theta_S$) der Sonne in Bezug auf die vertikale Ebene, welche die Hauptachse des Spalts (33) enthält, gemäß der Gleichung $\theta_s = arctan\left(\frac{x_1}{d}\right)$, wobei $x_1$ der Abstand der Mitte der Lichtlinie (L) ist, die von der Mitte der geometrischen Projektion des Spalts (33) auf dem Photosensor (F) zum Photosensor (F) gelangt und wobei die Winkelposition der Sonne $\theta_S$ der Winkel zwischen der vertikalen Ebene (VP), der die Hauptachse des Spalts (33) enthält, und der Ebene (SP) ist, die durch die Sonne geht und die Hauptachse des Spalts (33) enthält;
(g) das Erfassen des geographischen Standorts des elektronischen Sonnenkompasses (1) und der Greenwich-Zeit; und
(h) das Berechnen der Zeigerichtung des Objekts, dessen Orientierung ermittelt werden soll, in Bezug auf die Nordrichtung mittels der folgenden Unterschritte:

- des Berechnens auf der Grundlage der in den vorherigen Schritten (d)-(g) erhaltenen Daten der lokalen polaren Koordinaten ($\theta_1$, $\delta_1$') der Sonne, wobei $\theta_1$ der Azimut der Sonne in Bezug auf die lokale Südrichtung ist, die positiv/negativ definiert ist, wenn die Position der Sonne sich im Westen/Osten befindet, wobei $\delta_1$' die scheinbare Elevation der Sonne am Horizont ist, welche die Wirkung der Luftbrechung einschließt, wobei ein Algorithmus zur Bestimmung der Sonnenkoordinaten verwendet wird;
- des Berechnens des Orientierungswinkels Azimut$_f$ der vertikalen Ebene (VP), welche die Hauptachse des Spalts (33) enthält, mittels des Gleichungssystems:

$$Azimut_f = \arctan\left(\frac{Y}{X}\right) + 180° \cdot (X < 0) \cdot \frac{Y}{|Y|}$$

$$\begin{cases} X = \dfrac{\pm\sqrt{A^2 \cdot (A^2 + B^2 - C^2)} - C \cdot B}{A^2 + B^2} \\ Y = -\dfrac{B \cdot X + C}{A} \end{cases}$$

$$\begin{cases} A = y_s \cdot \tan(\theta_s) \cdot \sin(\beta) - x_s \\ B = -x_s \cdot \tan(\theta_s) \cdot \sin(\beta) - y_s \\ C = -z_s \cdot \tan(\theta_s) \cdot \cos(\beta) \end{cases}$$

in dem die Wahrheitsfunktion (X<0) 1 bzw. 0 ist, wenn sie verifiziert ist oder nicht, $\beta$ die Neigung der Ebene des Spalts (33) ist, wobei $x_s$, $y_s$, $z_s$ die kartesischen Komponenten des Einheitsvektors der Sonne im selben kartesischen Referenzsystem sind, das für die lokalen polaren Koordinaten $(\theta_1, \delta_1')$ verwendet wurde, bzw. mit den Richtungen Süden, Osten und der Vertikalen des Ortes zusammenfallen, an dem sich der elektronische Sonnenkompass (1) befindet, die aus den lokalen polaren Koordinaten $(\theta_1, \delta_1')$ mittels einer üblichen Transformation von polaren Koordinaten in kartesische Koordinaten erhalten werden können; und
- das Berechnen mittels der Gleichung:

$$Azimut_b = Azimut_f + \varphi,$$

des Winkels $Azimut_b$ in Bezug auf die Nordrichtung, die sich auf der Nord-/Südhalbkugel befindet, auf die die Zeigemittel (4) mit dem Objekt ausgerichtet sind, dessen Orientierung oder Ansichtsrichtung ermittelt werden soll, wobei die Ansichtsrichtung die Richtung der geraden Linie ist, welche die Mitte des elektronischen Sonnenkompasses (1) mit dem Objekt selbst verbindet.

13. Verfahren nach Anspruch 12, wobei ein elektronischer Kompass nach Anspruch 8 verwendet wird, **dadurch gekennzeichnet, dass** Schritt (a) mittels der Zweiachsen-Wasserwaage (5) ausgeführt wird, sodass die Zweiachsen-Wasserwaage angibt, dass der planare Sockel (22) sich in einer horizontalen Position befindet, sodass die Drehachse (A) der Halterung (2) und der Detektionseinheit (3) vertikal ist.

14. Verfahren nach einem der Ansprüche 12 oder 13, **dadurch gekennzeichnet, dass** der Erfassungsschritt (f) zum Bestimmen des Werts $x_1$ die folgenden Unterschritte umfasst:

- das Digitalisieren des vom Photosensor (F) detektierten Bildes, wobei ein zweidimensionales Array von numerischen Werten erhalten wird, die proportional zur Lichtintensität sind;
- das Integrieren der Werte der Matrix in der Richtung der Lichtlinie (L) oder das Summieren der Beiträge aller Reihen, um einen eindimensionalen Vektor von Werten Im (x), wobei der Ursprung x=0 der Variable x mit der geometrischen Mitte der Projektion des Spalts (33) des Photosensors (F) zusammenfällt, wobei die Integration eine Reduzierung des Bildes zu einem eindimensionalen Profil ermöglicht, und dann eine starke Reduzierung des statistischen Rauschens zu erhalten, was ein kritischer Punkt für das Erreichen einer hohen Genauigkeit des elektronischen Sonnenkompasses (1) ist;
- das Berechnen eines neuen Vektors von Werten durch das Mitteln von Werten eines Wertevektors Im (x), die mit denen der nächsten Nachbarn gemäß der "glättenden" Parabelgleichung erhalten werden:

$$Im'(x) = \frac{Im(x-1) \ + \ 2 \cdot Im(x) \ + \ Im(x+1)}{4},$$

und das Wiederholen dieses Schritts einer Vielzahl von Malen, um eine regelmäßigere Kurve zu erhalten, in der $x_1$ die Position des Maximums von Im' (x) leicht identifiziert, und/oder;
- das Berechnen des Abstands $x_1$ der Mitte der Lichtlinie (L) von der geometrischen Projektion der Mitte des Spalts (33) des Photosensors (F) als Position des Scheitelpunkts einer Parabel, wodurch Werte des Vektors Im (x) in einer Nachbarschaft des Maximums des Wertevektors Im (x) interpoliert werden, und/oder;
- das Berechnen des Abstands $x_1$ der Mitte der Lichtlinie (L) von der Mitte der geometrischen Projektion des Spalts (33) auf dem Photosensor (F) als Baryzentrum der Abbildung des Wertevektors Im (x) in einem spezifischen Intervall durch die folgende Gleichung:

$$x_l = \frac{\int\limits_{x1}^{x2} Im(x) \cdot x\,dx}{\int\limits_{x1}^{x2} Im(x)\,dx}$$

wobei $x_1$ und $x_2$ die Enden eines Intervalls sind, in dem der Wertevektor Im(x) einen Prozentwert, vorzugsweise 50 %, seines Maximums überschreitet.

15. Verfahren nach einem der Ansprüche 12-15, wobei ein elektronischer Kompass nach Anspruch 8 verwendet wird, **dadurch gekennzeichnet, dass** der Erfassungsschritt (g) mittels des GPS und/oder Karten und die geographische Greenwich-Zeit mittels des GPS und/oder einer Präzisionsuhr ausgeführt wird.

## Revendications

1. Boussole solaire électronique (1) comprenant
un support (2), capable de tourner autour d'un axe vertical (A),
une unité de détection (3) de la position du soleil, agencée sur ledit support (2), ladite unité de détection (3) étant capable de tourner autour dudit axe vertical (A) d'un angle de rotation ($\varphi$) par rapport audit support (2), ladite unité de détection (3) comprenant un goniomètre électronique (34), adapté pour mesurer ledit angle de rotation ($\varphi$),
des moyens de pointage (4) faisant partie dudit support (2), et
un écran de visualisation (6),
ladite boussole solaire électronique (1) étant **caractérisée**
**en ce que** ladite unité de détection (3) comprend une cellule photosensible matricielle (F), une unité de commande logique, connectée de manière fonctionnelle à ladite cellule photosensible (F), audit goniomètre électronique (34) et audit écran (6), et un récipient (31), dans lequel ladite cellule photosensible (F) est placé, ledit récipient (31) présentant une fente rectiligne (33) pour le passage de la lumière du soleil vers ladite cellule photosensible (F), ladite fente (33) ayant une largeur et une longueur de fente et faisant partie de ladite cellule photosensible (F),
**en ce que** ladite fente (33) et ladite cellule photosensible (F) sont inclinés d'un angle ($\beta$) par rapport au plan horizontal, de préférence égal à 45°, et sont séparés par une distance (d), et
**en ce que** ladite largeur de ladite fente (33) est approximativement égale à $\sqrt{\lambda \cdot d}$, où $\lambda$ est la longueur d'onde moyenne de la lumière du soleil, équivalent à environ 0,5 $\mu$m, et d est ladite distance de ladite fente (33) par rapport à ladite cellule photosensible (F),
ladite unité de commande logique étant programmée pour calculer les éphémérides du soleil sur la base de l'heure et des coordonnées géographiques de l'emplacement de la boussole (1) et pour traiter les données reçues par ladite cellule photosensible (F) et provenant dudit goniomètre électronique (34), afin de mesurer la direction de pointage desdits moyens de pointage (4) par rapport au nord géographique et/ou par rapport au sud géographique, en présentant le résultat sur ledit écran de visualisation (6).

2. Boussole solaire électronique (1) selon la revendication 1, **caractérisée en ce que** ladite longueur de ladite fente (33) est égale à d/[sin ($\beta$).cos ($\beta$)].

3. Boussole solaire électronique (1) selon l'une quelconque des revendications précédentes, **caractérisée en ce que** ledit récipient (31) comprend un couvercle (32) et **en ce que** ladite fente (33) est obtenue sur ledit couvercle (32).

4. Boussole solaire électronique (1) selon l'une quelconque des revendications précédentes, **caractérisée en ce que** la distance d de ladite fente (33) par rapport à ladite cellule photosensible (F) est entre 0,5 cm et 5 cm et **en ce que** la largeur de fente (33) est entre 50 $\mu$m et 160 $\mu$m.

5. Boussole solaire électronique (1) selon l'une quelconque des revendications précédentes, **caractérisée en ce que** la distance d entre le plan dans lequel ladite fente se trouve (33) et le plan de ladite cellule photosensible (F) est constante et la projection géométrique de ladite fente (33) sur ladite cellule photosensible (F) est de préférence parallèle à l'un des côtés de la cellule photosensible (F).

**6.** Boussole solaire électronique (1) selon l'une quelconque des revendications précédentes, **caractérisée en ce que** ladite cellule photosensible (F) est constitué d'un capteur d'image à CCD (dispositif à couplage de charge), et/ou à CMOS (métal-oxyde-semi-conducteur complémentaire), et/ou d'un réseau linéaire de pixels, de préférence rectangulaire.

**7.** Boussole solaire électronique (1) selon l'une quelconque des revendications précédentes, **caractérisée en ce que** ledit support (2) comprend un corps de confinement (21), une base plane (22), sur laquelle ledit corps de confinement (21) est fixé, et un trépied (23), et
**en ce que** lesdits moyens de pointage (4) incluent un pointeur optique (41), tel qu'un télescope pourvu d'un réticule qui peut être incliné par rapport au plan de la base plane (22), selon un angle d'élévation ($\gamma$), et/ou un pointeur laser (42), adapté pour émettre un faisceau laser de pointage (42'), qui peut également être incliné par rapport au plan de la base plane (22), selon ledit angle d'élévation ($\gamma$).

**8.** Boussole solaire électronique (1) selon l'une quelconque des revendications précédentes, **caractérisée en ce qu'**il comprend des moyens d'ajustement incluant un niveau biaxiale (5) et/ou un inclinomètre électronique, adapté pour détecter la verticalité dudit axe de rotation vertical (A) dudit support (2) et dudit récipient (31), et/ou des moyens pour acquérir des coordonnées locales et l'heure GMT, comme, par exemple, un détecteur GPS.

**9.** Boussole solaire électronique (1) selon la revendication 8, **caractérisée en ce que** ladite unité logique de commande est connectée audit GPS et/ou audit inclinomètre numérique, ladite unité logique de commande étant programmée pour traiter des données reçues à partir dudit GPS et/ou dudit inclinomètre numérique.

**10.** Boussole solaire électronique (1) selon l'une quelconque des revendications précédentes, **caractérisée en ce que** ledit support (2) comprend un dispositif motorisé pour la rotation de ladite unité de détection (3) autour dudit axe vertical de rotation (A), et **en ce que** ladite unité logique de commande commande le déplacement de ladite unité de détection (3) jusqu'à ce que le positionnement de la fente (33) soit approximativement devant le soleil.

**11.** Boussole solaire électronique (1) selon l'une quelconque des revendications précédentes, **caractérisée en ce qu'**il comprend des filtres de densité optique fixes ou variables, tels que des filtres basés sur la rotation de polariseurs et/ou des filtres photochromiques, et/ou un système d'exposition automatique de ladite cellule photosensible (F), approprié pour réduire le rayonnement solaire qui passe à travers ladite fente (33), afin d'optimiser le rapport signal/bruit de la lumière du soleil incidente sur ledit cellule photosensible (F).

**12.** Procédé pour déterminer la direction de pointage d'un objet par rapport au nord géographique en utilisant une boussole solaire électronique (1) selon l'une quelconque des revendications précédentes, **caractérisé en ce qu'**il comprend les étapes suivantes :

(a) le positionnement de ladite boussole solaire électronique (1), de façon que le support (2) et ledit axe vertical de rotation (A) d'unité de détection (3) soient verticaux ;
(b) la direction desdits moyens de pointage (4) pour les aligner avec un objet, dont on souhaite connaître l'orientation ;
(c) la rotation de ladite unité de détection (3), jusqu'à ce que ledit cellule photosensible (F) reçoive une ligne de lumière (L) provenant du soleil, en orientant ladite fente (33) approximativement devant le soleil ;
(d) la mesure dudit angle de rotation ($\varphi$) de ladite unité de détection (3), par rapport auxdits moyens de pointage (4), au moyen dudit goniomètre électronique (34) ;
(e) l'acquisition à partir dudit goniomètre électronique (34) de la valeur dudit angle de rotation ($\varphi$) ;
(f) l'acquisition d'une image de la ligne de lumière (L) projetée à partir de ladite fente (33) et détectée par ledit cellule photosensible (F), et le calcul au moyen de ladite unité de commande logique d'une position angulaire ($\theta_s$) du soleil, par rapport au plan vertical contenant le grand axe de ladite fente (33) selon l'équation

$$\theta_s = \arctan\left(\frac{x_l}{d}\right),$$ où $x_1$ est la distance du centre de la ligne de lumière (L), qui arrive sur la cellule photosensible (F) à partir du centre de la projection géométrique de la fente (33) sur ladite cellule photosensible (F) et où la position angulaire du soleil $\theta_s$ est l'angle entre le plan vertical (VP) qui contient le grand axe de ladite fente (33) et le plan (SP), qui passe à travers le soleil et contient le grand axe de ladite fente (33) ;
(g) l'acquisition de l'emplacement géographique de ladite boussole solaire électronique (1) et de l'heure GMT ; et
(h) le calcul de la direction de pointage dudit objet, dont on souhaite connaître l'orientation, par rapport à la direction du Nord, par les sous-étapes suivantes :

- le calcul, sur la base des données obtenues dans les étapes (d) à (g) précédentes, de coordonnées polaires locales $(\theta_1, \delta_1')$ du soleil, où $\theta_1$ est l'azimut du soleil par rapport à la direction locale du Sud, définie positive/négative si la position du soleil respectivement à l'ouest/à l'est, tandis que $\delta_1'$ est l'élévation apparente du soleil sur l'horizon qui inclut l'effet de réfraction de l'air, en utilisant un algorithme pour déterminer les coordonnées solaires ;
- le calcul de l'angle d'orientation $Azimut_f$ du plan vertical (VP) contenant le grand axe de ladite fente (33), par l'intermédiaire du système d'équations :

$$Azimut_f = \arctan\left(\frac{Y}{X}\right) + 180° \cdot (X < 0) \cdot \frac{Y}{|Y|}$$

$$\begin{cases} X = \dfrac{\pm\sqrt{A^2 \cdot (A^2 + B^2 - C^2)} - C \cdot B}{A^2 + B^2} \\[3mm] Y = -\dfrac{B \cdot X + C}{A} \end{cases}$$

$$\begin{cases} A = y_S \cdot \tan(\theta_S) \cdot \sin(\beta) - x_S \\ B = -x_S \cdot \tan(\theta_S) \cdot \sin(\beta) - y_S \\ C = -z_S \cdot \tan(\theta_S) \cdot \cos(\beta) \end{cases}$$

dans laquelle la fonction vérité $(X < 0)$ est 1 ou 0 respectivement si elle est vérifiée ou non, $\beta$ est l'inclinaison du plan de la fente (33), tandis que $x_s$, $y_s$, $z_s$ sont les composantes cartésiennes du vecteur unité du soleil dans le même système de référence cartésienne utilisé pour les coordonnées polaires locales $(\theta_1, \delta_1')$, coïncidant respectivement avec les directions Sud, Est et verticale de l'endroit où ledit boussole solaire électronique (1) se trouve, qui peuvent être obtenues à partir des coordonnées polaires locales $(\theta_1, \delta_1')$ au moyen d'une transformation commune de coordonnées polaires en coordonnées cartésiennes ; et
- le calcul, par l'équation :

$$Azimut_b = Azimut_f + \varphi,$$

de l'angle $Azimut_b$, par rapport à la direction Nord étant dans l'hémisphère nord/sud, sur laquelle lesdits moyens de pointage (4) sont alignés avec ledit objet dont on souhaite connaître l'orientation ou la direction de vue, ladite direction de vue étant la direction de la ligne droite joignant le centre dudit boussole solaire électronique (1) à l'objet lui-même.

13. Procédé selon la revendication 12, utilisant une boussole électronique selon la revendication 8, **caractérisé en ce que** ladite étape (a) est réalisée au moyen dudit niveau biaxial (5), de façon que le niveau biaxial indique que ladite base plane (22) est dans une position horizontale, de façon que le support (2) et ledit axe de rotation (A) d'unité de détection (3) soient verticaux.

14. Procédé selon l'une quelconque des revendications 12 ou 13, **caractérisé en ce que** ladite étape (f) d'acquisition pour déterminer la valeur $x_1$, comprend les sous-étapes suivantes :

- la numérisation de ladite image détectée par ladite cellule photosensible (F), en obtenant deux réseaux bidimensionnels de valeurs numériques proportionnelles à l'intensité lumineuse ;
- l'intégration des valeurs de ladite matrice dans la direction de la ligne de lumière (L), ou la sommation des contributions de toutes les rangées afin d'avoir un vecteur monodimensionnel de valeurs lm (x), où l'origine x = 0 de la variable x coïncide avec le centre géométrique de la projection de la fente (33) de ladite cellule photosensible (F), ladite intégration permettant une réduction de l'image en un profil monodimensionnel, et ensuite en une réduction forte du bruit statistique, qui est un point critique pour obtenir une précision élevée de la boussole solaire électronique (1) ;

- le calcul d'un nouveau vecteur de valeurs en faisant la moyenne de valeurs d'un vecteur de valeurs lm (x) obtenu avec ceux des voisins les plus proches en fonction de l'équation parabolique « de lissage » :

$$\text{Im}'(x) = \frac{\text{Im}(x-1) + 2 \cdot \text{Im}(x) + \text{Im}(x+1)}{4},$$

et la répétition de cette étape une pluralité de fois, pour obtenir une courbe plus régulière dans laquelle $x_1$ identifie facilement la position du maximum d'Im'(x) et/ou ;

- le calcul de la distance $x_1$ du centre de la ligne de lumière (L) à partir de la projection géométrique du centre de la fente (33) de ladite cellule photosensible (F), en tant que position du sommet d'une parabole, qui interpole les valeur dudit vecteur Im (x) dans un voisinage du maximum dudit vecteur de valeurs Im (x) et/ou ;

- le calcul de la distance $x_1$ du centre de la ligne de lumière (L) à partir du centre de la projection géométrique de la fente (33) sur ladite cellule photosensible (F) en tant que barycentre de la figure dudit vecteur de valeurs Im(x) à un intervalle spécifique par l'équation suivante :

$$x_l = \frac{\int_{x1}^{x2} Im(x) \cdot x\, dx}{\int_{x1}^{x2} Im(x)\, dx}$$

où $x_1$ et $x_2$ sont les extrémités d'un intervalle dans lequel le vecteur de valeurs Im(x) dépasse un pourcentage, de préférence 50 %, de son maximum.

**15.** Procédé selon l'une quelconque des revendications 12 à 15, utilisant une boussole électronique selon la revendication 8, **caractérisé en ce que** ladite étape (g) d'acquisition est réalisée par un GPS et/ou par des cartes et l'heure GMT géographique par ledit GPS et/ou par une montre de précision.

Fig. 1

Fig. 1'

Fig. 2

Fig. 3

**EP 2 938 963 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2155402 A
- US 2102587 A
- GB 525927 A
- US 4899451 A
- US 5425178 A
- US 5459931 A
- US 4028813 A
- US 20100177601 A
- FR 2761770
- ES 2179721
- CN 201297931 U
- US 2007117078 A
- US 20090044418 A
- US 20107698825 A
- US 20120173143 A
- CN 101344391
- US 20120116711 A
- US 20120227273 A